# EUROPÄISCHE PATENTANMELDUNG

(11) **EP 0 708 424 A1**
(43) Veröffentlichungstag der Anmeldung: **24.04.1996**
(21) Anmeldenummer: 95116372.4
(22) Anmeldetag: 17.10.1995
(51) Int. Cl.: G07F 19/00, G07F 7/10

(54) **Elektronische Geldbörse**

(30) Priorität: 18.10.1994 DE 4437283
(71) Anmelder: Accumulata Symi Grundstücks GmbH, D-80639 München (DE)
(72) Erfinder: Lainer, Dietmar, Dr., D-80639 München (DE)
(74) Vertreter: von Puttkamer, Nikolaus, Dipl.-Ing. Patentanwälte Haft, von Puttkamer Berngruber, Czybulka

(57) **Zusammenfassung**

Die Erfindung betrifft eine elektronische Geldbörse, die eine Anzeigeeinrichtung (2), eine Eingabeeinrichtung (7), eine Speichereinrichtung (4), einen Eingang (3) und einen Ausgang (5) aufweist. In die Speichereinrichtung (4) ist ein einem bestimmten Geldbetrag entsprechender bestimmter Betrag in der Form einer elektronischen Information über den Eingang (3) eingebbar. Über die Eingabeeinrichtung (7) ist ein von dem bestimmten Betrag abzuziehender und an eine weitere elektronische Geldbörse (10'') zu transferierender Betrag in der Form einer elektrischen Information eingebbar, an der Anzeigeeinrichtung (2) anzeigbar und über eine elektrische Verbindung (6), mit der die elektronische Geldbörse (10) mit einem weiteren Eingang (3') der weiteren elektronischen Geldbörse (10') in Verbindung steht, in eine Speichereinrichtung (4') der weiteren elektronischen Geldbörse (10') übertragbar. In der elektronischen Geldbörse (10) wird der zu transferierende Betrag von dem bestimmten Betrag abgezogen.

## Beschreibung

Die Erfindung betrifft eine elektronische Geldbörse nach dem Oberbegriff des Patentanspruches 1.

Üblicherweise werden Geschäfte dadurch getätigt, daß eine erste Person, z.B. ein Käufer, seiner Geldbörse einen bestimmten Betrag in der Form von Geldscheinen und/oder Geldmünzen entnimmt und einer zweiten Person, z.B. einem Verkäufer, nach Aushändigung eines Produktes oder Vornahme einer Dienstleistung, übergibt. Ein Nachteil im Hinblick auf das Gewicht und die Sicherheit besteht dabei darin, daß die genannten Geldscheine und/oder Geldmünzen in einer Geldbörse mitgeführt werden müssen.

Die Aufgabe der vorliegenden Erfindung besteht daher darin, eine Geldbörse zu schaffen, die das Mitführen und Bereithalten von Bargeld entbehrlich macht.

Diese Aufgabe wird durch eine elektronische Geldbörse der eingangs genannten Art gelöst, die durch die in dem kennzeichnenden Teil des Patentanspruches 1 angegebenen Merkmale gekennzeichnet ist.

Der wesentliche Vorteil der erfindungsgemäßen elektronischen Geldbörse besteht darin, daß durch sie das Mitführen und Bereithalten von Bargeld unnötig gemacht wird. Bei Verwendung der erfindungsgemäßen elektronischen Geldbörse wird auf der jeweiligen Bank ein gewünschter Geldbetrag in eine Speichereinrichtung der Geldbörse geladen, wobei dieser Geldbetrag dem Guthaben des Inhabers der elektronischen Geldbörse abgezogen wird. Der Inhaber der Geldbörse kann dann seine Geldbörse über eine elektrische Verbindung, vorzugsweise mit der Hilfe eines elektrischen Kabels oder dergleichen, mit der Geldbörse einer anderen Person verbinden und durch Vornahme einfacher Transaktionen von der Speichereinrichtung seiner Geldbörse einen gewünschten Betrag in die Speichereinrichtung der Geldbörse der anderen Person transferieren oder umgekehrt aus dem Speicher der Geldbörse der anderen Person einen vorbestimmten Betrag in die Speichereinrichtung seiner Geldbörse übernehmen. Da die elektronische Geldbörse einen Bildschirm und eine Tastatur aufweist, können die vorgenannten Transaktionen in einer äußerst einfachen und kontrollierten Weise sicher vorgenommen werden. Dabei wird ein Mißbrauch ausgeschlossen, da vor der Entnahme eines bestimmten Betrages von der Speichereinrichtung der Geldbörse eine Geheimzahl des Inhabers der Geldbörse eingegeben werden muß. Wenn sich nach der Vornahme mehrerer Transaktionen in der Speichereinrichtung der Geldbörse des Inhabers ein ausreichend großer Betrag befindet, kann dieser auf einer Bank aus der Speichereinrichtung entladen werden. Dieser Betrag wird dann dem Konto des Inhabers der Geldbörse gutgeschrieben und verzinst. Umgekehrt kann dann, wenn die Speichereinrichtung der elektronischen Geldbörse keinen oder keinen genügend großen Geldbetrag mehr aufweist, in der weiter oben beschriebenen Weise auf einer Bank ein neuer Geldbetrag eingespeichert werden. Auf diese Weise werden bei der Verwendung der erfindungsgemäßen elektronischen Geldbörsen Transaktionen mit Bargeld weitgehend unnötig.

Ein besonderer Vorteil der erfindungsgemäßen elektronischen Geldbörse besteht auch darin, daß der Inhaber der Geldbörse auf seiner Bank Beträge in beliebigen Währungen in die Speichereinrichtung der Geldbörse einladen kann. Er kann daher das "Geld" zum jeweils günstigsten Devisenkurs erhalten. Besonders bevorzugt sind Geldbörsen, die mehrere Speicher für verschiedene Währungen aufweisen, so daß der Inhaber einer derart ausgestalteten Geldbörse über mehrere Beträge in verschiedenen Währungen verfügt, was insbesondere für Geschäftsleute von Vorteil ist.

Weitere vorteilhafte Ausgestaltungen der Erfindung gehen aus den Unteransprüchen hervor.

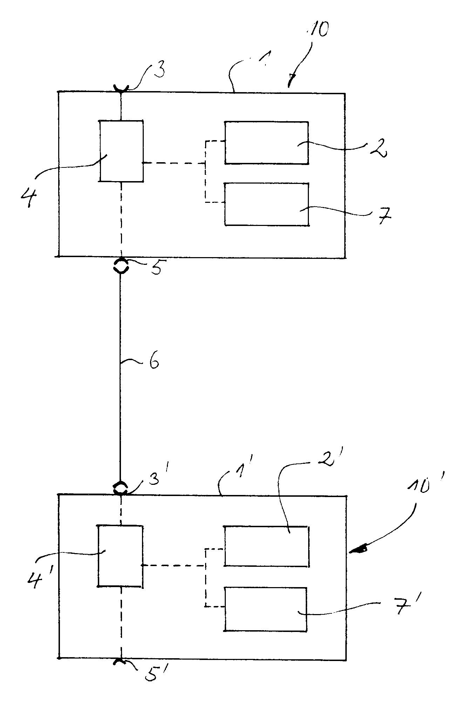

Im folgenden werden die Erfindung und deren Ausgestaltungen im Zusammenhang mit der Figur, die in schematischer Darstellung zwei über eine Verbindungsleitung miteinander verbundene elektronische Geldbörsen zeigt, erläutert.

Gemäß der Figur besteht die vorliegende elektronische Geldbörse 10 im wesentlichen aus einem Träger bzw. Gehäuse 1, das vorzugsweise etwa die Form einer Euroscheck- oder Kreditkarte aufweist. Das Gehäuse 1 besitzt eine Anzeigeeinrichtung 2 zur Anzeige verschiedener Informationen, eine Eingabeeinrichtung 7 zur Eingabe von Informationen und eine Speichereinrichtung 4 für vorgegebene Geldbeträge. Das Gehäuse 1 weist ferner einen Eingang 3 und einen Ausgang 5 auf, die mit einer die Speichereinrichtung 4 umfassenden Elektronik bzw. Recheneinheit verbunden sind.

In der Figur ist eine weitere elektronische Geldbörse 10' dargestellt, die wie die elektronische Geldbörse 10 aufgebaut ist. Demgemäß umfaßt die elektronische Geldbörse 10' einen Träger bzw. ein Gehäuse 1', eine Anzeigeeinrichtung 2', eine Eingabeeinrichtung 7', eine Speichereinrichtung 4', einen Eingang 3' und einen Ausgang 5'. Der Ausgang 5 der elektronischen Geldbörse 10 ist über eine Verbindungsleitung 6 mit dem Eingang 3' der elektronischen Geldbörse 10' elektrisch verbindbar.

Im folgenden wird die Funktionsweise der elektronischen Geldbörse näher erläutert. Zunächst wird auf der Bank des Inhabers der elektronischen Geldbörse 10 über den Eingang 3 oder über einen anderen Eingang des Gehäuses 1 ein bestimmter Geldbetrag, beispielsweise DM 1.000,--, in die Speichereinrichtung 4 eingeladen. Die elektronische Geldbörse 10 entspricht dann einer normalen Geldbörse, die DM 1.000,-- in der Form von Bargeld enthält. Wenn der Inhaber der elektronischen Geldbörse 10 nun an den Inhaber einer weiteren elektronischen Geldbörse 10', beispielsweise beim Erwerb einer Ware in einem Kaufhaus oder dergleichen, auszahlen will, wird in der folgenden Weise vorgegangen. Dabei wird in der nachstehenden Beschreibung der Inhaber der weiteren elektronischen Geldbörse 10' als Empfänger bezeichnet. Zunächst wird der Ausgang 5 der elektronischen Geldbörse 10 mit dem Eingang 3' der elektronischen Geldbörse 10' über die elektrische Verbindungsleitung 6 verbunden. Der Inhaber der elektronsichen Geldbörse 10 gibt nun an der Eingabeeinrichtung 7, die vorzugsweise die Form einer Tastatur aufweist, den aus der Speichereinrichtung 4 auszuzahlenden Geldbetrag (z.B. DM 100,--) ein. Der eingegebene Betrag wird an der Anzeigeeinrichtung 2 angezeigt. Nach Überprüfung dieses Betrages gibt der Inhaber der elektronischen Geldbörse 10 an der Tastatur 7 den Befehl "Auszahlen" vorzugsweise in Verbindung mit seiner Geheimzahl ein. Im Falle der Eingabe der Geheimzahl erfolgt die "Auszahlung" nur nach Überprüfung auf die Richtigkeit der Geheimzahl durch die die Speichereinrichtung 4 enthaltende Recheneinheit. Diese Überprüfung erfolgt vorzugsweise dadurch, daß die eingegebene Geheimzahl mit der vorzugsweise in einem Speicher eines Chips der Geldbörse 10 gespeicherten Geheimzahl verglichen wird. Bei Richtigkeit der Geheimzahl wird nun vom Inhalt der Speichereinrichtung 4 (DM 1.000,--) der auszuzahlende Betrag (DM 100,--) abgezogen und es wird das in der Speichereinrichtung 4 verbleibende restliche Guthaben (DM 900,--) an der Anzeigeeinrichtung 2 angezeigt. Vorzugsweise nach Betätigen einer Quittierungstaste wird der der Speichereinrichtung 4 entnommene Betrag (DM 100,--) zum Inhalt der Speichereinrichtung 4' (z.B. DM 1.500,--) der Geldbörse 10' hinzuaddiert und es wird der nunmehr in der Speichereinrichtung 4' vorliegende Geldbetrag (DM 1.600,--) an der Anzeigeeinrichtung 2' angezeigt. Die elektronischen Geldbörsen 10 und 10' können nun voneinander getrennt werden.

Der jeweilige Inhalt der Speichereinrichtung 4 bzw. 4' kann auf einer Bank dem Inhaber der elektronischen Geldbörse 10 bzw. 10' dadurch gutgeschrieben werden, daß die Speichereinrichtung 4 bzw. 4' auf der Bank, beispielsweise über den Ausgang 5 oder einen anderen Ausgang des Gehäuses 1 entladen wird.

Die genannten Anzeigeeinrichtungen 2 bzw. 2' weisen vorzugsweise die Form von handelsüblichen LED-Anzeigeeinheiten oder dergleichen auf. Die Spannunsversorgung der elektronischen Geldbörsen 10 bzw. 10' kann vorzugsweise über Batterien oder Solarzellen erfolgen.

Es wird darauf hingewiesen, daß die Verbindung zwischen den elektronischen Geldbörsen 10 und 10' auch über Telefon, Funktelefon oder ganz allgemein durch Datenfernübertragung erfolgen kann. Es besteht also die Möglichkeit, daß ein Inhaber, z.B. in einer ersten Stadt einem Inhaber in einer zweiten, entfernten Stadt einen "Geldbetrag" durch Datenfernübertragung vorzugsweise über eine Telefonleitung bzw. -verbindung transferieren kann. Der Inhaber, der die Speichereinrichtung seiner elektronischen Geldbörse auffüllen will, kann dies ebenfalls durch Datenfernübertragung tun. Er muß also nicht selbst zur Bank gehen.

Die vorliegende Erfindung unterscheidet sich von dem heute üblichen Kreditkartensystem dadurch, daß die einen Geldbetrag übernehmende Geldbörse 10' den Geldbetrag der jeweils "gebenden" Geldbörse 10 über einen Code auf Echtheit überprüft. Bei Kreditkarten muß die Bonität eines Kunden stets über telefonische Anfragen geklärt werden. Bei der Erfindung wird also wie im Bargeldverkehr mit "elektronischem Geld" bezahlt.

Ein besonderer Vorteil der vorliegenden elektronischen Geldbörse besteht auch darin, daß die Rück- und/oder Vorderseite des Gehäuses 1 als Werbefläche verwendet werden kann. Dabei ist es auch denkbar, die Anzeigeeinrichtung 2 in die konkrete Werbung einzubeziehen und die an der Anzeigeeinrichtung angezeigten Werbeaussagen, die beispielsweise die Kosten eines Produktes betreffen, zu bestimmten Zeitintervallen, beispielsweise halbjährlich, zu aktualisieren.

## Patentansprüche

1. Elektronische Geldbörse, dadurch gekennzeichnet, daß sie eine Anzeigeeinrichtung (2), eine Eingabeeinrichtung (7), eine Speichereinrichtung (4), einen Eingang (3) und einen Ausgang (5) aufweist, daß in die Speichereinrichtung (4) ein einem bestimmten Geldbetrag entsprechender bestimmter Betrag in der Form einer elektronischen Information über den Eingang (3) eingebbar ist, daß über die Eingabeeinrichtung (7) ein von dem bestimmten Betrag abzuziehender und an eine weitere elektronische Geldbörse (10'') zu transferierender Betrag in der Form einer elektrischen Information eingebbar, an der Anzeigeeinrichtung (2) anzeigbar und über eine elektrische Verbindung (6), mit der die elektronische Geldbörse (10) mit einem weiteren Eingang (3') der weiteren elektronischen Geldbörse (10') in Verbindung steht, in eine Speichereinrichtung (4') der weiteren elektronischen Geldbörse (10') übertragbar ist und daß in der elektronischen Geldbörse (10) der zu transferierende Betrag von dem bestimmten Betrag abgezogen wird.

2. Elektronische Geldbörse nach Anspruch 1, dadurch gekennzeichnet, daß die weitere elektronische Geldbörse (10') eine weitere Anzeigeeinrichtung (2'), eine weitere Eingabeeinrichtung (7'), eine weitere Speichereinrichtung (4'), einen weiteren Eingang (3') und einen weiteren Ausgang (5') aufweist und daß der zu transferierende Betrag zu dem in der weiteren Speichereinrichtung (4') bereits enthaltenden Betrag hinzuaddiert wird.

3. Elektronische Geldbörse nach Anspruch 1 oder 2, dadurch gekennzeichnet, daß in der elektronischen Geldbörse (10) der sich nach Abzug des zu transferierenden Betrages ergebende Betrag an der Anzeigeeinrichtung (4) anzeigbar ist.

4. Elektronische Geldbörse nach einem der Ansprüche 1 bis 3, dadurch gekennzeichnet, daß in der weiteren elektronischen Geldbörse (10') der sich nach Aufaddieren des zu transferierenden Betrages zu dem in der weiteren Speichereinrichtung (4') bereits enthaltenden Betrag ergebende Betrag an der Anzeigeeinrichtung (4') anzeigbar ist.

5. Elektronische Geldbörse nach einem der Ansprüche 1 bis 4, dadurch gekennzeichnet, daß die elektrische Verbindung (6) die Form eines elektrischen Kabels oder einer Telefon- oder Funktelefonleitung aufweist.

6. Elektronische Geldbörse nach einem der Ansprüche 1 bis 5, dadurch gekennzeichnet, daß der bestimmte Betrag über den Eingang (3) in die Speichereinrichtung (4) von einem Geldinstitut einem Konto des Inhabers der elektronischen Geldbörse (10) entnehmbar und in die Speichereinrichtung (4') eingebbar ist.

7. Elektronische Geldbörse nach einem der Ansprüche 1 bis 6, dadurch gekennzeichnet, daß der aktuelle Betrag der Speichereinrichtung (4) oder der Speichereinrichtung (4') von einem Geldinstitut der Speichereinrichtung (4) bzw. der Speichereinrichtung (4') entnehmbar und einem Konto des Inhabers der Geldbörse (10) bzw. der Geldbörse (10') gutschreibbar ist.

8. Elektronische Geldbörse nach einem der Ansprüche 1 bis 7, dadurch gekennzeichnet, daß die Anzeigeeinrichtung (2) und/oder die Anzeigeeinrichtung (2') eine LED-Anzeigeeinrichtung ist.

9. Elektronische Geldbörse nach einem der Ansprüche 1 bis 8, dadurch gekennzeichnet, daß die Eingabeeinrichtung (7) und/oder die weitere Eingabeeinrichtung (7') die Form einer Tastatur aufweist.

10. Elektronische Geldbörse nach einem der Ansprüche 1 bis 9, dadurch gekennzeichnet, daß in der elektronischen Geldbörse (10) und/oder in der elektronsichen Geldbörse (10') eine Geheimzahl des Inhabers der Geldbörse (10) bzw. der Geldbörse (10') gespeichert ist und vor Vornahme eines Transfers mit einer an der Eingabeeinrichtung (7) bzw. der weiteren Eingabeeinrichtung (7') eingegebenen Geheimnummer verglichen wird.

11. Elektronische Geldbörse nach einem der Ansprüche 1 bis 10, dadurch gekennzeichnet, daß die elektronische Geldbörse (10) und/oder die weitere elektronische Geldbörse (10') die Form eines kreditkartenähnlichen Trägers (1) aufweist.
